Europäisches Patentamt

European Patent Office

Office européen des brevets

(19)

(11) EP 0 821 452 A1

(12) DEMANDE DE BREVET EUROPEEN

(43) Date de publication:
28.01.1998 Bulletin 1998/05

(51) Int Cl.⁶: H01S 3/06

(21) Numéro de dépôt: 97401788.1

(22) Date de dépôt: 24.07.1997

(84) Etats contractants désignés:
AT BE CH DE DK ES FI FR GB GR IE IT LI LU MC
NL PT SE

(30) Priorité: 26.07.1996 FR 9609436

(71) Demandeur: COMMISSARIAT A L'ENERGIE
ATOMIQUE
75015 Paris Cédex 15 (FR)

(72) Inventeurs:
• Fulbert, Laurant
  38500 Voiron, (FR)
• Rabarot, Marc
  38170 Seyssinet (FR)

(74) Mandataire: Dubois-Chabert, Guy et al
c/o BREVATOME
25, rue de Ponthieu
75008 Paris (FR)

(54) **Cavité microlaser et microlaser à sélection de mode, et procédés de fabrication**

(57)     L'invention a pour objet une cavité microlaser, comportant un miroir d'entrée (34), un miroir de sortie (36), un milieu actif laser (32), et des moyens pour réaliser une sélection des modes transverses de la cavité lorsque celle-ci est pompée, de manière à permettre une oscillation d'un ou de plusieurs modes transverses de la cavité et à empêcher l'oscillation des autres modes transverses de la cavité.

FIG. 5 A

EP 0 821 452 A1

## Description

## Domaines techniques et art antérieur

L'invention concerne le domaine des microlasers ou encore des cavités microlasers, dont le milieu actif est solide.

Les microlasers ont de nombreuses applications, dans des domaines aussi variés que l'industrie automobile, l'environnement, l'instrumentation scientifique, la télémétrie.

La structure d'un microlaser est celle d'un empilement de multicouches.

Le milieu actif laser est constitué par un matériau de faible épaisseur (entre 150-1000 µm) et de petites dimensions (quelques mm$^2$), sur lequel des miroirs diélectriques de cavité sont directement déposés. Ce milieu actif peut être pompé par une diode laser III--V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

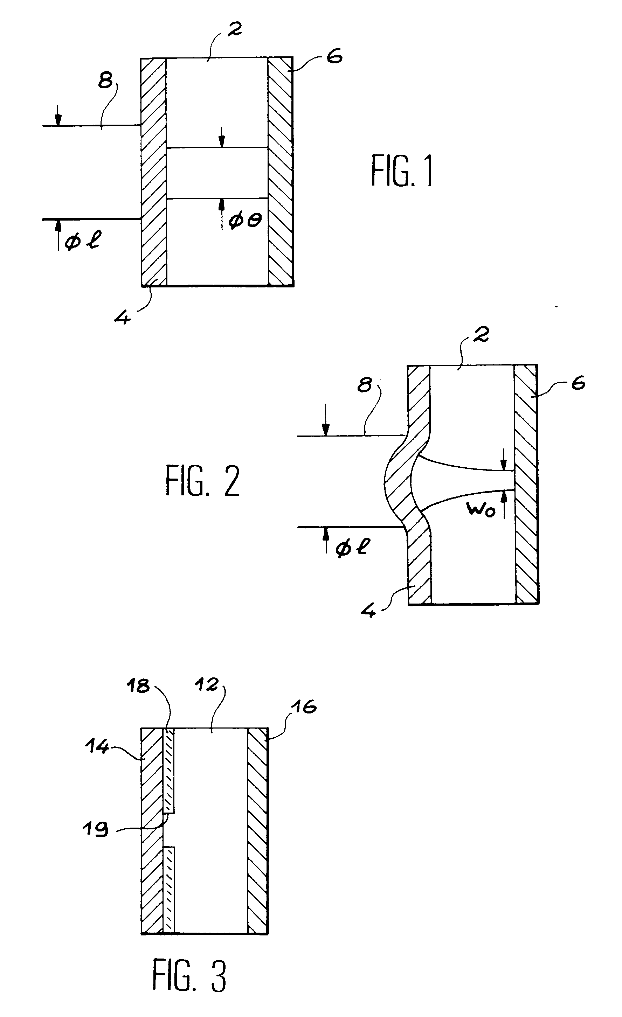

Les figures 1 et 2 ci-jointes représentent des structures désormais classiques de microlasers. La structure de la figure 1 correspond à une cavité microlaser plan-plan, la structure de la figure 2 correspond à une cavité microlaser plan-concave. On peut également réaliser des cavités microlaser biconcaves. Dans tous les cas, la structure de base consiste en un milieu actif laser 2, la cavité microlaser étant limitée par un miroir d'entrée 4 et un miroir de sortie 6. Ces cavités peuvent également incorporer d'autres éléments intracavités tels que par exemple un absorbant saturable déposé sous forme de couches minces, comme décrit dans les documents EP-653 824 (US-A-5 495 494).

Un certain nombre de modes transverses ou longitudinaux peuvent osciller à l'intérieur d'une telle cavité laser, quelle qu'en soit la structure. Ces modes résonnent à des fréquences différentes et la présence de plusieurs modes dans la cavité résulte en un étalement spectral du faisceau émis par le microlaser et une plus grande divergence.

Il est possible de calculer l'épaisseur du milieu actif laser 2 ou de la cavité microlaser, de manière à n'obtenir qu'un seul mode longitudinal : un tel calcul et des exemples sont donnés dans le document EP-653 824.

Il a été dit plus haut que les diodes à laser constituent un moyen commode de pomper une cavité microlaser. Cependant, les faisceaux des diodes laser ont de mauvaises caractéristiques géométriques, et ne sont pas facilement focalisables dans une zone de petites dimensions à l'intérieur du mode fondamental de la cavité microlaser. Ainsi, sur les figures 1 et 2, la référence 8 désigne le faisceau de pompage issu d'une diode laser, présentant un diamètre $\varnothing_\ell$, tandis que le mode fondamental de la cavité présente respectivement un diamètre $\varnothing_0$ (figure 1), et un diamètre au moins égal à $w_0$

(figure 2). Par conséquent, le plus souvent, le faisceau de pompage est absorbé dans des zones en favorisant des modes transverses, autres que le mode fondamental de la cavité microlaser. Le gain créé dans la cavité, du fait du pompage, favorise l'apparition, dans le faisceau laser émis par la cavité microlaser, de modes transverses d'ordre supérieur.

Ce phénomène est plus sensible dans les cavités stables, notamment plan-concave (figure 2) que dans la cavité plan-plan (figure 1), du fait que, dans les premiers cas, la taille du mode fondamental est plus petite que dans le second cas. De même, le niveau de perte des modes supérieurs introduits par la géométrie de la cavité est plus faible dans le cas d'une cavité plan-concave que dans le cas d'une cavité plan-plan. Cependant, dans tous les cas, l'apparition de modes transverses dégrade la qualité spatiale et la qualité spectrale du faisceau du microlaser. D'une manière générale, dans le cas du pompage d'un microlaser plan-concave par une diode de puissance, les seuils d'apparition des modes transverses sont proches du seuil d'apparition du mode fondamental. De tels lasers ne peuvent donc pas avoir un fonctionnement monomode transverse, en particulier lorsque de fortes puissances de pompage sont mises en jeu et lorsque le faisceau de pompe crée du gain sur les modes transverses d'ordre supérieur.

Par conséquent, les microlasers peuvent en principe fonctionner en régime monomode transverse, mais pas dans le cas où le faisceau de pompage est de grande dimension par rapport au faisceau laser (cas des cavités stables par exemple) ou lorsque la puissance de pompe est très élevée.

D'une manière générale, on ne connaît pas de microlasers ayant une structure telle que l'on puisse faire entrer en résonance uniquement certains modes de la cavité, les autres modes étant inhibés.

## Exposé de l'invention

L'invention cherche à résoudre ces problèmes.

A cette fin, elle a pour objet une cavité microlaser monolithique, comportant un miroir d'entrée, un miroir de sortie, un milieu actif laser, et des moyens pour réaliser une sélection des modes transverses de la cavité lorsque celle-ci est pompée, de manière à permettre une oscillation d'un, ou de plusieurs, mode(s) transverse(s) de la cavité et à empêcher l'oscillation des autres modes transverses de la cavité.

Les moyens pour réaliser une sélection des modes transverses de la cavité peuvent comporter au moins un diaphragme intracavité, présentant une ouverture annulaire ou circulaire, de manière à permettre une oscillation d'un, ou de plusieurs, mode(s) transverse(s) de la cavité et à empêcher l'oscillation des autres modes transverses de la cavité. Selon une variante, le diaphragme peut être disposé sur l'un des miroirs de la cavité.

L'invention a également pour objet une cavité microlaser monolithique comportant un miroir d'entrée, un miroir de sortie, un milieu actif laser, l'un au moins des deux miroirs étant gravé, ou déposé, de manière à permettre, (ou ayant une forme permettant) l'oscillation d'un, ou de plusieurs, mode(s) transverse(s) de la cavité et à empêcher (ou empêchant) l'oscillation des autres modes transverses de la cavité.

Ces structures permettent de réduire le nombre de modes transverses, et de favoriser un, ou plusieurs, mode(s) particulier(s) de fonctionnement de la cavité. Dans tous les cas, on augmente le seuil d'apparition de certains modes transverses et on en inhibe d'autres.

Par ailleurs, les structures ci-dessus sont compatibles avec les méthodes de fabrication collectives, utilisant les moyens de la microélectronique, mises en oeuvre pour la production des microlaser.

Dans tous les cas, un mode de réalisation particulièrement intéressant est celui où seul le mode fondamental peut osciller et où on empêche les autres modes d'osciller. Un faisceau microlaser de bonne qualité spectrale et spatiale est ainsi obtenu. Dans le cas d'une cavité microlaser plan-plan, un micromiroir d'entrée ou de sortie, en forme de disque, dont le diamètre est calculé à une puissance de pompe donnée, pour accroître les pertes sur les modes d'ordre supérieur et empêcher l'effet laser sur ces modes, permet d'obtenir ces résultats. Dans le cas où la cavité est stabilisée (d'une cavité plan-concave), on peut, toujours afin d'obtenir un fonctionnement monomode en mode fondamental, réaliser un miroir plan, en forme de disque, de diamètre calculé comme précédemment. Le diamètre du mode fondamental au niveau du miroir plan est donné par la formule

$$\varphi = 2\sqrt{\frac{\lambda}{\pi n}\sqrt{R - L}} \ ,$$

où $\lambda$ est la longueur d'onde du mode fondamental du microlaser, n est l'indice du matériau intracavité, L est la longueur de la cavité microlaser et R est le rayon de courbure du miroir concave. Selon une variante, c'est le miroir concave qui présente un diamètre calculé comme précédemment. Dans ce dernier cas, le mode fondamental présente au niveau du miroir concave un diamètre

$$\varphi = 2\sqrt{\frac{\lambda}{\pi n}\sqrt{R - L}}\sqrt{\frac{R}{R - L}} \ ,$$

avec les mêmes notations que précédemment.

L'invention a également pour objet un procédé de réalisation d'une cavité microlaser monolithique, comportant une étape de réalisation de moyens permettant d'effectuer une sélection des modes transverses de la cavité.

Plus précisément, cette étape peut être une étape de réalisation d'un diaphragme, présentant une ouverture circulaire ou annulaire, ou ayant une forme, permettant une oscillation d'un, ou de plusieurs, mode(s) de la cavité, ainsi que l'empêchement de l'oscillation des autres modes de la cavité. Un tel diaphragme peut être disposé à l'intérieur de la cavité microlaser, sur l'un des miroirs de la cavité.

Il est également possible de réaliser une gravure d'un des miroirs d'entrée et de sortie de la cavité microlaser. La gravure peut être réalisée par exemple par usinage ionique ou par gravure ionique réactive, ou par attaque chimique après formation d'un masque sur le miroir. Selon une variante, la gravure peut être réalisée par abrasion.

Au lieu d'une gravure d'un ou des miroirs, il est possible de réaliser une étape de dépôt sélectif d'au moins un des miroirs de la cavité, le dépôt ayant lieu uniquement dans les zones permettant une réflexion d'un, ou de plusieurs, mode(s) de la cavité, les autres modes de la cavité ne pouvant être réfléchis par ledit miroir. Ce dépôt peut avoir lieu après réalisation d'un masque, puis attaque du masque dans les zones de dépôt.

L'invention a également pour objet un microlaser comportant une cavité microlaser telle que celle décrite ci-dessus, et des moyens de pompage de la cavité microlaser.

## Brève description des figures

D'autres caractéristiques et avantages de l'invention ressortiront mieux de la description qui va suivre, donnée à titre purement illustratif et non limitatif, en référence aux figures annexées, dans lesquelles :

- les figures 1 et 2, déjà décrites ci-dessus, présentent des cavités microlaser selon l'art antérieur,
- les figures 3 et 4 représentent des variantes d'un premier mode de réalisation d'une cavité microlaser selon l'invention,
- les figures 5A et 5B représentent un autre mode de réalisation de l'invention, pour une cavité plan-plan,
- la figure 6 représente une variante d'un mode de réalisation de l'invention, pour une cavité plan-concave,
- les figures 7 à 9 représentent des cavités microlaser selon l'invention, avec milieu actif laser et d'autres éléments intracavité,
- les figures 10A à 10C sont des étapes d'un procédé de réalisation d'une cavité microlaser selon l'invention,
- les figures 11A à 11D sont des étapes d'un autre procédé de réalisation d'une cavité microlaser selon l'invention,
- les figures 12A et 12B représentent des microlasers selon l'invention,
- les figures 13A à 13E représentent des étapes pour graver un miroir en vue de la réalisation d'une cavité microlaser selon l'invention,
- les figures 14A à 14D représentent des étapes pour réaliser un dépôt sélectif d'un miroir en vue de la réalisation d'une cavité microlaser selon l'invention.

## Description détaillée de modes de réalisation de l'invention

Dans le cas d'une cavité instable, comme la cavité plan-plan de la figure 1, le mode fondamental présente un diamètre $\varnothing_0$ de l'ordre de plusieurs dizaines de micromètres, par exemple 60 µm. La taille exacte peut être déterminée à l'aide d'un analyseur de faisceau et d'une caméra calibrée.

Toujours dans le cas d'une cavité plan-plan, les modes transverses, d'ordre supérieur, présentent un diamètre environ 1,5 fois plus grand que le mode fondamental.

Dans le cas d'une cavité stable, notamment d'une cavité plan-concave comme illustrée sur la figure 2, le diamètre $w_0$ du mode fondamental au niveau du miroir plan 6 est donné par :

$$w_0 = 2 \sqrt{\frac{\lambda}{\pi n} \sqrt{L(R - L)}} \, ,$$

où $\lambda$ est la longueur d'onde du mode fondamental, n l'indice du matériau intracavité, (lorsqu'il y a plusieurs éléments intracavité le diamètre du mode fondamental est calculé en prenant en compte la propagation dans les différents milieux), L la longueur de la cavité microlaser et R le rayon de courbure du miroir concave.

Au niveau du miroir concave, le diamètre du mode est égal à :

$$w = w_0 \sqrt{\frac{R}{R - L}} \, .$$

Toujours dans le cas d'une structure plan-concave, le diamètre des modes transverses d'ordre supérieur est environ 1,5 fois plus grand que le mode fondamental.

Dans tous les cas, quelle que soit la géométrie de la cavité, le diamètre de chaque mode est donc bien déterminé. L'invention permet de réaliser un "diaphragme" dont les caractéristiques géométriques sont telles que ledit diaphragme laisse passer uniquement un ou plusieurs modes de la cavité, ou encore dégrade suffisamment les caractéristiques de la cavité pour les modes d'ordre supérieur.

Dans le cas du mode fondamental, il est possible de réaliser un diaphragme, par exemple métallique, disposé à l'intérieur de la cavité. De préférence, le diaphragme est disposé sur l'un ou l'autre des miroirs d'entrée et de sortie, ce diaphragme présentant une ouverture, par exemple circulaire, dont la taille est calculée comme précédemment.

Ainsi, sur la figure 3, un microlaser présente, outre un milieu actif 12 (et éventuellement d'autres composants intracavités) des miroirs 14, 16 d'entrée et de sortie de la cavité, ainsi qu'un diaphragme 18 (diaphragme intracavité, figure 3). Ainsi, seul le mode fondamental peut effectuer des oscillations à l'intérieur de la cavité microlaser. Il en résulte un faisceau laser de qualité améliorée : ses caractéristiques spatiales et spectrales dépendent seulement des caractéristiques spatiales et spectrales du mode fondamental.

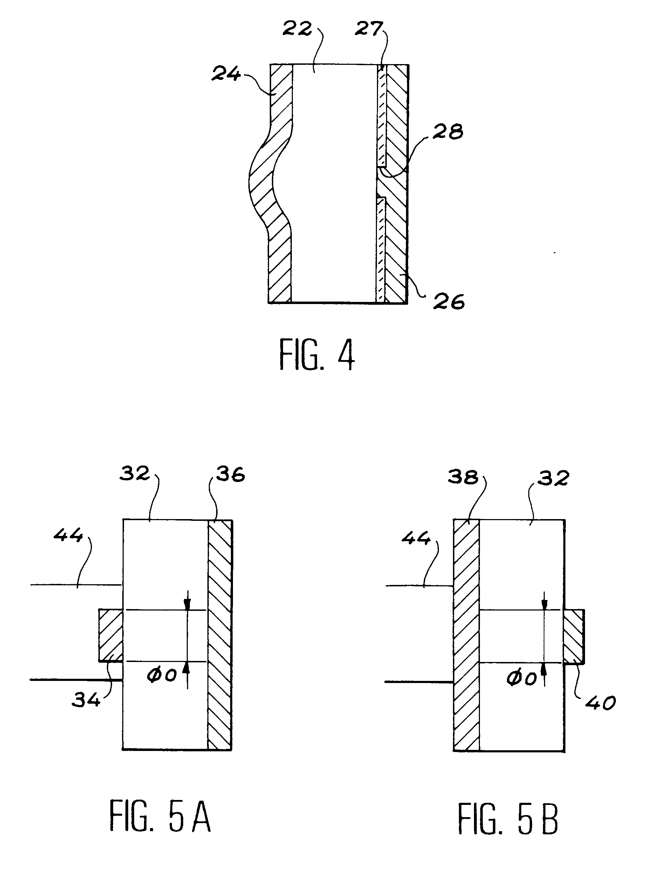

La figure 4 correspond au cas d'une cavité microlaser stable, plan-concave. Cette cavité comprend un milieu actif 22 (éventuellement d'autres composants intracavités) et des miroirs d'entrée 24 et de sortie 26 de la cavité. La cavité comporte un diaphragme 27 intracavité (figure 4). Dans le cas de la figure 4, le diaphragme 27 présente une ouverture 28 de diamètre calculé comme précédemment.

Selon une variante, non représentée sur les figures, un diaphragme intracavité peut également être déposé sur la face interne du miroir 24, avec la même caractéristique d'ouverture géométrique calculée comme précédemment.

Un autre mode de réalisation de l'invention va être décrit en liaison avec les figures 5A à 6. Dans cet autre mode de réalisation, c'est la forme de l'un des miroirs de la cavité qui permet de réaliser une sélection des modes. Ainsi, sur les figures 5A et 5B, le microlaser comporte, outre un milieu actif laser 32 (et éventuellement d'autres éléments intracavité, du type élément non linéaire), des miroirs d'entrée 34, 38 et de sortie 36, 40 dont l'un est par exemple en forme de disque de diamètre calculé comme précédemment. Le faisceau de pompage 44, obtenu par exemple avec une diode laser, ne permet pas de faire osciller à l'intérieur de la cavité des modes transverses d'ordre supérieur au mode fondamental. Seul ce dernier va pouvoir osciller entre les deux miroirs, puisque l'un de ceux-ci est d'extension latérale limitée.

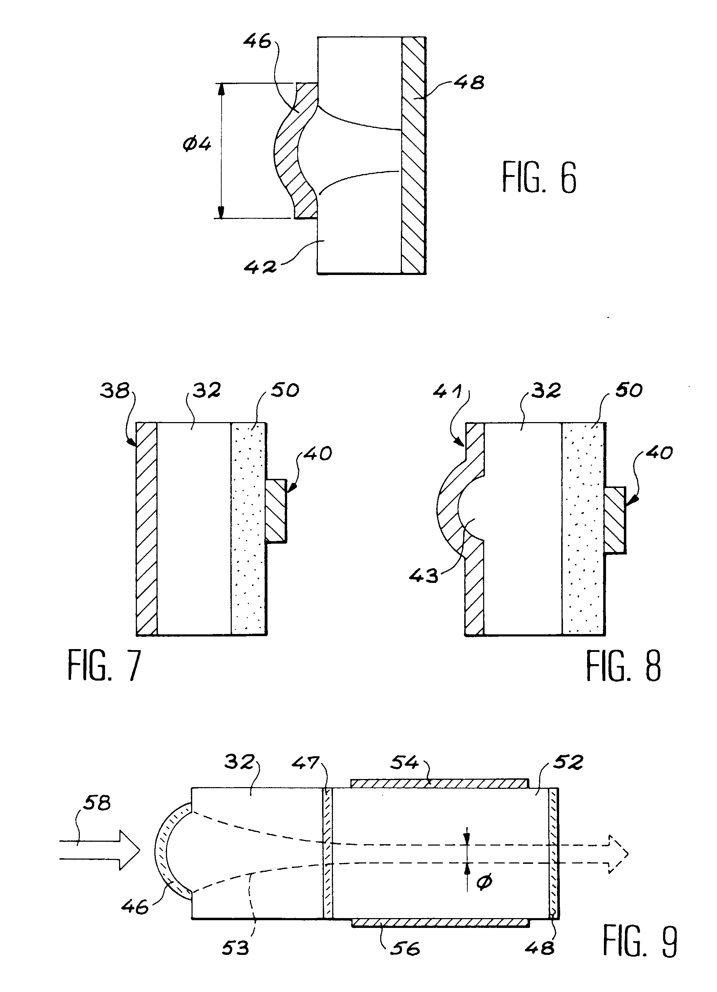

Dans le cas d'une cavité plan-concave (figure 6), c'est par exemple le miroir concave 46 dont l'extension est limitée à une valeur, ou diamètre, calculé comme précédemment. Selon une variante, c'est le miroir de sortie 48 dont l'extension latérale est limitée.

Les exemples de structures de cavités microlaser qui ont été donnés ci-dessus en liaison avec les figures 3A à 6 permettent de ne conserver que le mode fondamental de la cavité microlaser et d'éliminer tous les autres modes transverses. Il est également possible en donnant aux moyens de sélection des modes, c'est-à-dire au diaphragme ou au miroir d'entrée ou de sortie de la cavité, des formes appropriées, de sélectionner d'autres modes transverses, en éliminant par exemple le mode fondamental.

Quel que soit le mode de réalisation envisagé, le matériau actif laser consiste essentiellement en un matériau de base dopé avec des ions actifs laser.

Le matériau de base peut être choisi parmi l'un des matériaux cristallins suivants : YAG ($Y_3Al_5O_{12}$), LMA

(LaMgAl$_{11}$O$_{19}$), YVO$_4$, YSO (Y$_2$SiO$_5$), YLF (YLiF$_4$) ou GDVO$_4$, etc... Ce peut être également un verre. Des critères de choix pour l'un ou l'autre de ces matériaux sont donnés dans le document EP-653 824 (document US-A-5 495 494). Ce document donne également les indications sur le choix de l'épaisseur e du milieu actif laser, en particulier pour obtenir un laser émettant un seul mode longitudinal ; typiquement, l'épaisseur du milieu actif est de l'ordre de :

- 750 µm pour un milieu actif YAG,
- 500 µm pour un milieu actif YVO4,
- 150 µm pour un milieu actif LMA.

En ce qui concerne les ions dopants, on choisit en général du néodyme (Nd) pour une émission laser autour de 1,06 µm. On peut également choisir de l'erbium (Er) ou un codopage erbium-ytterbium (Er+Yb) pour une émission autour de 1,5 µm. Pour une émission autour de 2 µm, on choisit du thulium (Tm) ou de l'holmium (Ho) ou un codopage thulium-holmium. Le dopage à l'ytterbium seul permet d'obtenir une émission à 1,03 µm dans le YAG.

D'autres éléments peuvent être également présents à l'intérieur de la cavité microlaser. Comme illustré sur la figure 7, il peut s'agir d'un élément absorbant saturable 50. De manière particulièrement avantageuse, l'absorbant saturable peut être une couche mince de matériau absorbant saturable, directement déposée sur le milieu actif solide 32. Un procédé de réalisation particulièrement intéressant, pour cette couche d'absorbant saturable, est l'épitaxie en phase liquide. Dans ce cas, la couche 50 est composée d'un matériau de base, identique à celui du milieu actif solide 32, et dopé avec des ions lui conférant des propriétés d'absorbant saturable, par exemple des ions chrome (Cr$^{4+}$) ou erbium (Er$^{3+}$). Ainsi, on peut obtenir une couche d'absorbant saturable, directement déposée sur le milieu actif laser, et d'épaisseur au maximum égale à 500 µm. Toutes les informations nécessaires à la réalisation d'une telle couche d'absorbant saturable sont données dans le document EP-653 824 (US-A-5 495 494). En particulier, il est également possible de réaliser un dépôt d'absorbant saturable de part et d'autre du milieu actif laser 32, et d'obtenir une cavité microlaser avec deux couches de matériau absorbant saturable directement déposées sur le milieu actif laser.

Il est également possible de réaliser des micromiroirs 43 (figure 8) sur la surface du matériau actif laser 32. Là encore, toutes les informations nécessaires à la réalisation de ces microlentilles sont données dans le document EP-653 824. Les micromiroirs permettent de stabiliser la cavité microlaser.

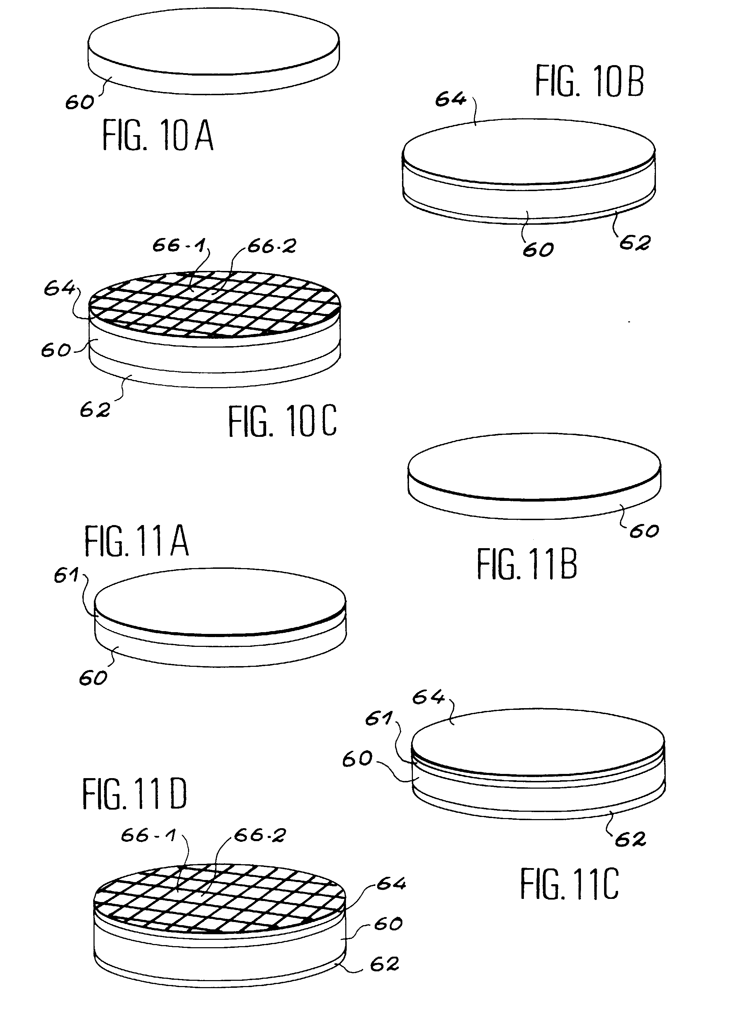

Le matériau actif laser d'une cavité microlaser peut être également associé à des moyens de déclenchement actifs, disposés à l'intérieur de la cavité. Ce mode de réalisation est illustré sur la figure 9, où la référence 32 désigne toujours le milieu actif laser, et où la cavité est limitée par des miroirs d'entrée 46 et de sortie 48. En fait, un miroir intermédiaire 47 délimite deux cavités : une première cavité résonnante est constituée par le milieu actif laser, et une seconde activité résonnante par un matériau 52 possédant un indice susceptible de varier en fonction de perturbations extérieures. Ce matériau 52 peut être un matériau électrooptique, tel que du LiTaO$_3$, auquel on applique une différence de potentiel à l'aide de deux électrodes de contact 54, 56. Un faisceau de pompage 58 est dirigé sur le miroir d'entrée 46. Ce dernier est concave, et ses dimensions lui permettent d'assurer la sélection des modes conformément à l'enseignement de l'invention. Ce miroir permet également d'assurer une réduction de la taille du faisceau laser dans le milieu électrooptique 52. Les conditions relatives au rayon de courbure de ce miroir, et le procédé pour réaliser la structure de la figure 9 sont donnés dans le document FR-A-95 00767 (US-A-8 587 477).

Les exemples des figures 7 à 9 ci-dessus concernent des structures dans lesquelles la sélection des modes est assurée par la forme des miroirs. Cependant, la présence d'un absorbant saturable 50 (par exemple sous forme de couche mince), de micromiroirs 43 ou de moyens 52 de déclenchement actif de la cavité est également compatible avec un diaphragme intracavité 18, 27 (figures 3, 4).

Enfin, d'autres éléments intracavité peuvent être prévus, tels que des éléments optiquement non linéaires (doubleur ou tripleur de fréquence, comme décrit dans FR-95 05650, ou oscillateur paramétrique optique, comme décrit dans FR 95 05654).

Les figures 10A à 10C illustrent des étapes de mise en oeuvre d'un procédé pour fabriquer un microlaser selon l'invention, dans lequel les moyens de sélection des modes transverses sont obtenus en donnant aux miroirs d'entrée et/ou de sortie de la cavité une forme appropriée.

Dans une première étape (figure 10A), on choisit un matériau actif laser approprié. On a déjà présenté, ci-dessus, les différents matériaux possibles. Une lame 60 de ce matériau est découpée, par exemple à une épaisseur comprise entre 0,5 et 5 mm. Cette lame subit ensuite un polissage double face.

Ensuite (figure 10B), on réalise des dépôts de miroirs d'entrée et de sortie 62, 64 de part et d'autre de l'élément obtenu au cours de l'étape précédente. Il s'agit en général de miroirs dichroïques, obtenus par un dépôt de multicouches diélectriques, procédé connu de l'homme du métier et disponible commercialement. Une gravure d'au moins l'un des miroirs est alors réalisée de manière à donner à un miroir, d'entrée ou de sortie, la forme voulue lui permettant d'assurer la fonction de sélection de modes, conformément à l'invention. Cette étape de gravure sera détaillée plus loin. Selon une variante, le dépôt des miroirs est réalisé de manière sélective, de façon à ne déposer de surface réfléchissante que sur les zones destinées à réfléchir un mode de la cavité microlaser. Cette variante sera également détaillée plus loin.

Ensuite (figure 10C), la structure de multicouche obtenue est découpée pour obtenir des puces microlaser 66-1, 66-2, ... Cette découpe peut être réalisée par une scie diamantée (de type de celles qui sont utilisées en microélectronique pour la découpe des puces au silicium). Les puces obtenues peuvent avoir quelques millimètres carrés de section.

Il est possible de prévoir une étape supplémentaire, au cas où on souhaite fabriquer, sur l'une ou l'autre des faces de la structure obtenue, un réseau de micromiroirs. De préférence, on grave directement les micromiroirs sur le matériau laser, en utilisant les techniques utilisées couramment en microélectronique.

Dans le cas où la sélection des modes est assurée par un diaphragme intracavité (comme sur les figures 3A et 4A), des étapes de réalisation d'un microlaser selon l'invention sont les suivantes (figures 11A à 11D).

La première étape est identique à celle décrite ci-dessus en liaison avec la figure 10A.

On réalise ensuite (figure 11B) un dépôt d'une couche 61 d'un matériau, par exemple un matériau métallique à l'aide duquel le diaphragme va être réalisé. Ce dépôt peut être un dépôt sélectif, par exemple de manière à réaliser des ouvertures 19, 28 (figures 3, 4) dans chacune des puces microlaser : dans ce cas, le diaphragme est immédiatement obtenu. Ou bien, on réalise un dépôt d'une couche 61 continue qui est ensuite gravée de manière à ménager des ouvertures, circulaires ou annulaires, ayant la forme nécessaire.

Les étapes suivantes (dépôt de couches diélectriques pour former les miroirs, figure 11C ; découpe de puces élémentaires microlaser, figure 11D) sont identiques aux étapes décrites ci-dessus en liaison avec les figures 10B et 10C.

Dans tous les cas, la structure obtenue ne nécessite, à aucun moment, l'alignement optique des différents composants. Par ailleurs, elle n'introduit aucune colle optique.

Le pompage de la cavité est préférentiellement un pompage optique. Ainsi, les diodes laser III-V sont particulièrement bien adaptées pour pomper une cavité microlaser.

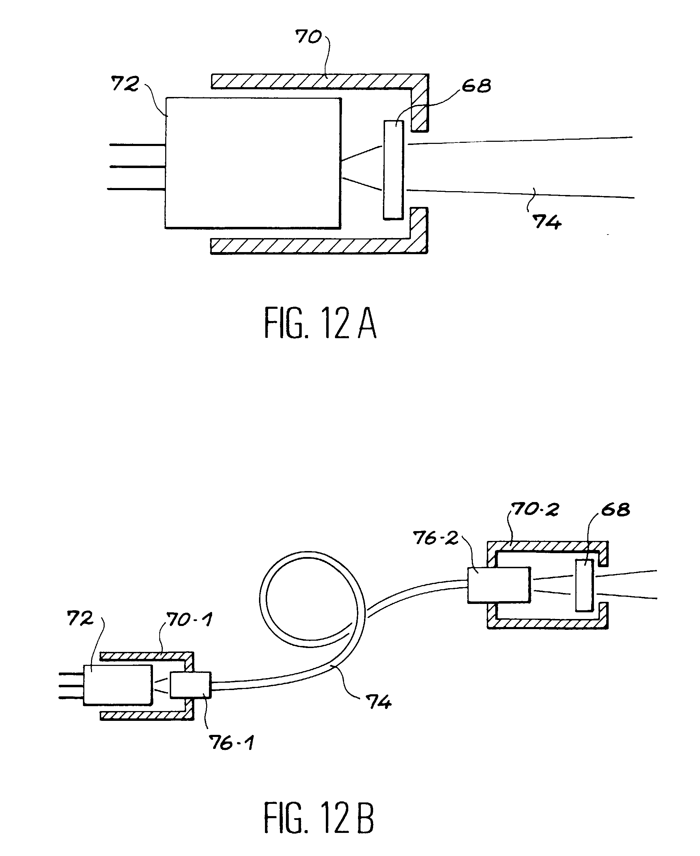

Comme illustré sur la figure 12A, une cavité microlaser 68 obtenue comme décrit ci-dessus peut être montée dans un boîtier mécanique 70, prévu pour recevoir également la diode laser de pompage 72. La référence 74 représente le faisceau laser, continu ou en impulsion, obtenu. Selon un autre mode de réalisation (figure 12B), il est possible de prévoir deux boîtiers séparés 70-1 et 70-2 : l'un pour recevoir la cavité microlaser 68, l'autre pour recevoir la diode laser de pompage 72, les deux boîtiers étant reliés par une fibre optique 74, à l'aide de connecteurs 76-1 et 76-2 prévus dans chacun des boîtiers.

Le faisceau de pompage peut être de grande dimension par rapport au faisceau laser (c'est le cas pour une cavité stabilisée pompée par diode) ou bien la puissance de pompage peut être élevée : la structure de microlaser selon l'invention permet de ne sélectionner que le, ou les, mode(s) transverse(s) voulu(s).

Un exemple détaillé de réalisation de miroirs par dépôt sélectif, ou de gravure des miroirs en vue de leur donner une forme adaptée à la sélection des modes, va maintenant être décrit.

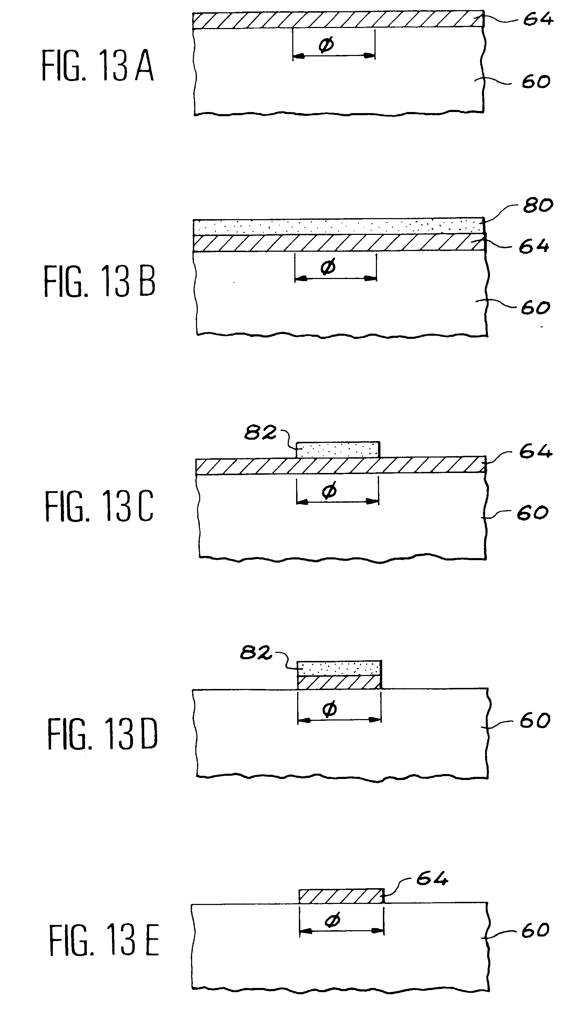

Les figures 13A à 13E illustrent des étapes du procédé dans lequel une couche de miroirs 64 de diamètre $\varphi$ est déposée sur la lame d'un milieu actif à laser 60. On cherche à réaliser une cavité permettant de sélectionner un mode, par exemple le mode fondamental

Après dépôt de la couche de miroir 64 (figure 13A), on étale une couche de résine 80 (figure 13B). Par masquage et photolithographie, on révèle des plots 82 de résine aux endroits où l'on veut conserver le miroir 64 (figure 13C). On réalise ensuite une attaque de la surface du miroir soit par usinage ionique, soit par gravure ionique réactive, soit par attaque chimique (figure 13D). La zone sur laquelle se trouve le plot de résine 82 préserve le miroir, alors que ce dernier est attaqué dans les autres zones. La résine est ensuite éliminée de la zone où le miroir 64 est resté intact (figure 13E).

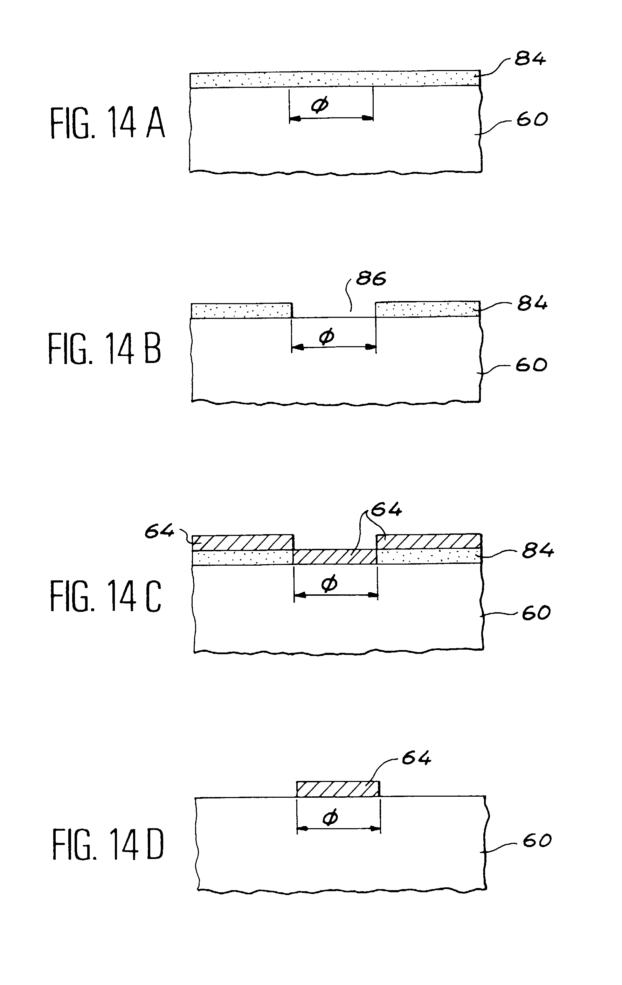

Des étapes du procédé de dépôt sélectif des miroirs sont illustrées sur les figures 14A à 14D. Sur la lame de matériau laser 60, on étale une couche de résine photosensible 84 (figure 14A). Par insolation, puis révélation et attaque de la résine, on élimine celle-ci dans les zones 86 où doit être réalisé le dépôt des miroirs (figure 14B). On dépose ensuite la couche de miroirs 64, en couche mince, comme déjà expliqué ci-dessus. On obtient ainsi une couche de miroirs uniquement dans la zone dont les dimensions correspondent aux dimensions du diaphragme à réaliser pour sélectionner un mode, par exemple le mode fondamental (figure 14C). On élimine ensuite la résine par exemple par un procédé de "lift-off", bien connu en microélectronique, en dehors de la zone extérieure au traitement de miroirs (figure 14D).

Une troisième méthode, non illustrée sur les figures, consiste à réaliser une couche de miroirs sur une lame de matériau actif laser (comme sur la figure 13A), puis à attaquer mécaniquement les miroirs après dépôt par abrasion. La zone où l'on veut éliminer les miroirs est par exemple attaquée par une lame abrasive en rotation.

La structure de cavité microlaser microlithique selon la présente invention permet d'augmenter la qualité spatiale et spectrale d'un faisceau laser, en réduisant le nombre de modes transverses et en sélectionnant certains d'entre eux. En particulier, il peut être intéressant de favoriser un fonctionnement $TEM_{00}$, ou fonctionnement en mode transverse fondamental. La structure de cavité microlaser selon l'invention permet d'augmenter le seuil d'apparition des modes transverses, et même d'inhiber ces modes transverses. Par ailleurs, la structure selon l'invention est compatible avec des procédés de fabrication collective des microlasers. Les techniques utilisées sont des techniques du domaine de la microélectronique. Ainsi, on peut réaliser une production de masse, à très faible coût.

**Revendications**

1. Cavité microlaser, comportant un miroir d'entrée (14, 24, 34, 38, 41, 46), un miroir de sortie (16, 26, 36, 40, 48), un milieu actif laser (12, 22, 32), et des moyens (18, 20, 27, 30, 34, 40, 46) pour réaliser une sélection des modes transverses de la cavité lorsque celle-ci est pompée, de manière à permettre une oscillation d'un, ou de plusieurs, mode(s) transverse(s) de la cavité et à empêcher l'oscillation des autres modes transverses de la cavité.

2. Cavité microlaser selon la revendication 1, les moyens pour réaliser une sélection des modes de la cavité comportant au moins un diaphragme intracavité (18, 27), présentant une ouverture (19, 28) circulaire ou annulaire, de manière à permettre une oscillation d'un, ou de plusieurs, mode(s) de la cavité et à empêcher l'oscillation des autres modes de la cavité.

3. Cavité microlaser selon la revendication 1, les moyens pour réaliser une sélection des modes de la cavité comportant au moins un diaphragme (20, 30) disposé sur l'un desdits miroirs, et présentant une ouverture (21, 31) circulaire ou annulaire de manière à permettre une oscillation d'un, ou de plusieurs, mode(s) de la cavité et à empêcher l'oscillation des autres modes de la cavité.

4. Cavité microlaser selon l'une des revendications 1 à 3, les moyens, pour réaliser une sélection des modes de la cavité, permettant l'oscillation du mode fondamental et empêchant les autres modes d'oscillation.

5. Cavité microlaser comportant un miroir d'entrée (34, 38, 41, 46), un miroir de sortie (36, 40, 48), un milieu actif laser (32), l'un au moins (34, 40, 46) des deux miroirs étant gravé, ou déposé, de manière à permettre, l'oscillation d'un, ou de plusieurs, mode (s) de la cavité et à empêcher, l'oscillation des autres modes de la cavité.

6. Cavité microlaser selon la revendication 5, le, ou les miroir(s) étant gravé(s), ou déposé(s), de manière à permettre l'oscillation du mode fondamental de la cavité et à empêcher l'oscillation des autres modes de la cavité.

7. Cavité microlaser selon l'une des revendications 1 à 6, la cavité étant plan-plan.

8. Cavité microlaser selon les revendications 6 et 7, au moins un (34, 40) des miroirs étant en forme de disque de diamètre inférieur ou égal au diamètre ($\varnothing_0$) du mode fondamental.

9. Cavité selon l'une des revendications 1 à 6, la cavité étant stabilisée.

10. Cavité selon les revendications 6 et 9, la cavité étant plan-concave et le miroir plan (40) étant en forme de disque de diamètre inférieur ou égal à

$$2\sqrt{\frac{\lambda}{\pi n}\sqrt{R-L}}\,,$$

où $\lambda$ est la longueur d'onde du mode fondamental du microlaser, n est l'indice du matériau laser, L est la longueur de la cavité microlaser et R est le rayon de courbure du miroir concave.

11. Cavité selon les revendications 6 et 9, la cavité étant plan-concave et le miroir concave (46) présentant un diamètre ($\varnothing_0$) inférieur ou égal à

$$2\sqrt{\frac{\lambda}{\pi n}\sqrt{R-L}}\sqrt{\frac{R}{R-L}}\,,$$

où $\lambda$ est la longueur d'onde du mode fondamental microlaser, n est l'indice du matériau laser, L est la longueur de la cavité microlaser et R est le rayon de courbure du miroir concave.

12. Procédé de réalisation d'une cavité microlaser, comportant une étape de réalisation de moyens (18, 20, 27, 30, 34, 40, 46) pour réaliser une sélection des modes transverses de la cavité.

13. Procédé selon la revendication 12, l'étape de réalisation de moyens permettant une sélection des modes étant une étape de réalisation d'un diaphragme (18, 20, 27, 30), présentant une ouverture (19, 21, 28, 31), circulaire ou annulaire, de manière à permettre une oscillation d'un, ou de plusieurs, mode (s) de la cavité et à empêcher l'oscillation des autres modes de la cavité.

14. Procédé selon la revendication 13, le diaphragme (18, 27) étant disposé à l'intérieur de la cavité microlaser.

15. Procédé selon la revendication 13, la cavité microlaser présentant un miroir de sortie (16, 26) et un miroir d'entrée (14, 24), le diaphragme (20, 30) étant disposé sur l'un desdits miroirs.

16. Procédé de réalisation d'une cavité microlaser, comportant une étape de gravure d'un des miroirs d'entrée et de sortie de la cavité, de manière à permettre une oscillation d'un, ou de plusieurs, mode(s) de la cavité et à empêcher l'oscillation des autres modes de la cavité.

**17.** Procédé selon la revendication 16, la gravure du miroir ayant lieu après formation d'un masque (82) sur le miroir (64).

**18.** Procédé selon la revendication 17, la gravure étant réalisée par usinage ionique, ou par gravure ionique réactive, ou par attaque chimique.

**19.** Procédé selon la revendication 16, la gravure étant réalisée par abrasion.

**20.** Procédé de réalisation d'une cavité microlaser, comportant une étape de dépôt sélectif d'au moins un des miroirs de la cavité microlaser, le dépôt ayant lieu uniquement dans les zones (86) permettant une réflexion d'un, ou de plusieurs, mode(s) de la cavité, les autres modes de la cavité ne pouvant être réfléchis par ledit miroir.

**21.** Procédé selon la revendication 20, le dépôt du miroir ayant lieu après réalisation d'un masque (84), puis attaque du masque dans les zones de dépôt du miroir.

**22.** Procédé selon l'une des revendications 16 à 21, le, ou les, miroir(s) étant réalisé(s) de manière à permettre l'oscillation du mode fondamental de la cavité et à empêcher l'oscillation des autres modes de la cavité.

**23.** Procédé selon l'une des revendications 12 à 22, la cavité étant plan-plan.

**24.** Procédé selon les revendications 22 et 23, au moins un des miroirs étant réalisé en forme de disque de diamètre inférieur ou égal au diamètre ($\varnothing_0$) du mode fondamental de la cavité microlaser.

**25.** Procédé selon l'une des revendications 12 à 22, la cavité étant stabilisée.

**26.** Procédé selon les revendications 22 et 23, la cavité étant plan-concave et le miroir plan (40) étant réalisé en forme de disque de diamètre inférieur ou égal à

$$2\sqrt{\frac{\lambda}{\pi n}\sqrt{R-L}} \ ,$$

où $\lambda$ est la longueur d'onde du mode fondamental du microlaser, n est l'indice du matériau laser, L est la longueur de la cavité microlaser et R est le rayon de courbure du miroir concave.

**27.** Procédé selon les revendications 22 et 23, la cavité étant plan-concave et le miroir concave (46) étant réalisé avec un diamètre ($\varnothing_4$) inférieur ou égal à

$$2\sqrt{\frac{\lambda}{\pi n}\sqrt{R-L}}\sqrt{\frac{R}{R-L}} \ ,$$

où $\lambda$ est une des longueurs d'onde de fonctionnement du microlaser, n est l'indice du matériau laser, L est la longueur de la cavité microlaser et R le rayon de courbure du miroir concave.

**28.** Microlaser comportant une cavité microlaser selon l'une des revendications 1 à 12 et des moyens de pompage (72) de la cavité microlaser.

FIG. 1

FIG. 2

FIG. 3

FIG. 4

FIG. 5 A

FIG. 5 B

FIG. 6

FIG. 7

FIG. 8

FIG. 9

FIG. 10 A

FIG. 10 B

FIG. 10 C

FIG. 11 A

FIG. 11 B

FIG. 11 D

FIG. 11 C

FIG. 12 A

FIG. 12 B

FIG. 13 A

FIG. 13 B

FIG. 13 C

FIG. 13 D

FIG. 13 E

FIG. 14 A

FIG. 14 B

FIG. 14 C

FIG. 14 D

**Office européen des brevets**

## RAPPORT DE RECHERCHE EUROPEENNE

Numéro de la demande

EP 97 40 1788

### DOCUMENTS CONSIDERES COMME PERTINENTS

| Categorie | Citation du document avec indication. en cas de besoin des parties pertinentes | Revendication concernee | CLASSEMENT DE LA DEMANDE (Int.Cl.6) |
|---|---|---|---|
| X | US 5 414 724 A (ZHOU SHOUHUAN ET AL) 9 mai 1995 | 1,4,9, 12,25,28 | H01S3/06 |
| Y | * abrégé * | 2,3,5-8, 10,11, 13-24, 26,27 | |
| X | US 5 343 487 A (SCOTT JEFFERY W ET AL) 30 août 1994 * figure 2 * | 1 | |
| X | US 5 461 637 A (MOORADIAN ARAM ET AL) 24 octobre 1995 * abrégé * * colonne 1, ligne 23 – ligne 57 * | 1 | |
| X | US 5 539 765 A (SIBBETT WILSON ET AL) 23 juillet 1996 * colonne 7, ligne 1 – ligne 2 * | 1 | |
| Y | EP 0 694 361 A (HONEYWELL INC) 31 janvier 1996 | 2,3,5-8, 10,11, 13-24, 26,27 | DOMAINES TECHNIQUES RECHERCHES (Int.Cl.6) H01S |
| | * page 1, ligne 30 – ligne 3; revendications 1-5 * | | |
| A | US 4 519 708 A (PERLMUTTER MICHAEL S ET AL) 28 mai 1985 * abrégé * | 1,3,4,6 | |
| A | EP 0 476 857 A (COHERENT INC) 25 mars 1992 * colonne 5, ligne 13 – ligne 17; figure 2 * | 1,2 | |

Le présent rapport a été établi pour toutes les revendications

| Lieu de la recherche | Date d'achèvement de la recherche | Examinateur |
|---|---|---|
| LA HAYE | 12 novembre 1997 | Galanti, M |

EPO FORM 1503 03.82 (P04C02)